Europäisches Patentamt

European Patent Office

Office européen des brevets

(11) Numéro de publication: **0 365 423**
**A1**

## (12) DEMANDE DE BREVET EUROPEEN

(21) Numéro de dépôt: **89402867.9**

(22) Date de dépôt: **17.10.89**

(51) Int. Cl.⁵: **B60R 25/02**

(30) Priorité: **21.10.88 FR 8814835**

(43) Date de publication de la demande:
**25.04.90 Bulletin 90/17**

(84) Etats contractants désignés:
**AT BE CH DE ES FR GB GR IT LI LU NL SE**

(71) Demandeur: **COMPAGNIE FINANCIERE MECANIQUE EMBOUTISSAGE TRAITEMENT ASSEMBLAGE - COFIMETA S.A.**
**40, Boulevard Henri Sellier**
**F-92150 Suresnes(FR)**

(72) Inventeur: **Delain, Didier**
**1156 rue des Moines**
**F-59182 Loffre(FR)**

(74) Mandataire: **Ecrepont, Robert**
**Cabinet Ecrepont 12 Place Simon Vollant**
**F-59800 Lille(FR)**

(54) **Dispositif d'immobilisation en rotation et/ou translation d'un arbre guidé dans au moins l'un de ces mouvements.**

(57) L'invention se rapporte à un dispositif d'immobilisation en rotation et/ou en translation par rapport à un support d'un arbre guidé dans au moins l'un de ces mouvements par rapport au dit support et notamment d'un arbre de direction.

Il est caractérisé en ce qu'il comprend une pièce dite de renfort (21) maintenue solidaire du carter par un moyen de liaison (22) et qui comporte d'une part au moins un pied (23) d'appui sur la face externe (24) de la paroi (14) du carter et d'autre part au moins deux butées (25) disposées en vis à vis pour enserrer, au moins sur une certaine hauteur prédéterminée "h", l'extrémité basse (20) du corps du moyen de déplacement du pêne ou d'un fourreau solidaire de ce corps et ce de manière à s'opposer au déplacement du dit corps sous l'effet de chaque action reçue par le pêne lorsqu'il coopère avec l'arbre dans sa fonction d'immobilisation.

_Fig:2_

Xerox Copy Centre

# DISPOSITIF D'IMMOBILISATION EN ROTATION ET/OU EN TRANSLATION PAR RAPPORT A UN SUPPORT D'UN ARBRE GUIDE DANS AU MOINS L'UN DE CES MOUVEMENTS PAR RAPPORT AU DIT SUPPORT ET NOTAMMENT D'UN ARBRE DE DIRECTION

L'invention se rapporte à un dispositif d'immobilisation en rotation et/ou en translation par rapport à un support d'un arbre guidé dans au moins l'un de ces mouvements par rapport au dit support et notamment d'un arbre de direction.

Plus particulièrement mais non exclusivement l'invention intéresse un dispositif d'immobilisation en rotation de l'arbre de commande du mécanisme d'orientation des roues d'un véhicule automoteur par rapport à une pièce solidaire du chassis tel son carter.

En effet, les dispositifs de commande du mécanisme d'orientation des roues d'un véhicule comprennent généralement un arbre guidé essentiellement en rotation par un support et qui, d'une part, à son extrémité dite haute, porte un volant et, d'autre part, à son extrémité opposée, dite basse, commande au moins indirectement le mécanisme d'orientation des roues.

Classiquement l'arbre de direction est, par des moyens prévus à cet effet, guidé en rotation mais aussi immobilisé en translation dans un carter tubulaire solidaire d'un support tel une poutre transversale du chassis du véhicule.

Pour prévenir le vol et/ou l'utilisation frauduleuse des véhicules automoteurs, il est connu de recourir à un dispositif d'immobilisation en rotation de l'arbre de direction par rapport au carter qui l'enveloppe au moins localement.

Classiquement, pour produire l'immobilisation en rotation recherchée, les dispositifs connus mettent en oeuvre, d'une part, une butée sensiblement radiale solidaire de l'arbre de direction et, d'autre part, un pêne mobile en translation et qui, placé sous l'influence d'un moyen de déplacement commandé, peut être amené soit dans une position dite active pour coopérer avec la butée et donc entraver la rotation de l'arbre, soit dans une position dite inactive pour libérer la dite butée et permettre ainsi la rotation de ce même arbre.

Le moyen de déplacement commandé comprend généralement un mécanisme à serrure pour la manoeuvre et le verrouillage du pêne au moyen d'une clef.

Généralement ce moyen de déplacement commandé forme un ensemble avec le pêne et précisément comprend un corps cylindrique logeant le mécanisme de manoeuvre du pêne et tout ou partie du dit pêne selon que ce dernier est en position inactive ou non.

Classiquement, d'une part, le carter comporte dans la paroi une découpe permettant au pêne de venir coopérer avec la butée radiale de l'arbre et, d'autre part, le moyen de déplacement commandé du pêne est logé dans un manchon maintenu solidaire du carter, non seulement dans une orientation sensiblement radiale à l'axe longitudinal de l'arbre de direction, mais également avec l'une des ouvertures extrêmes qu'il comprend située en correspondance avec la découpe précitée du carter.

Généralement, le corps du moyen de déplacement commandé du pêne ou un fourreau qui en est solidaire a sa face interne c'est à dire celle qui fait face à la paroi cylindrique de l'arbre de direction qui est sensiblement tangente à la surface intérieure du carter.

Selon l'inventeur, ce type de montage est particulièrement vulnérable et précisément : une première action malveillante de forte intensité exercée sur le volant, lorsque le pêne est en position active, tend à dégager l'extrémité du corps du moyen de commande du pêne de la découpe du carter et une seconde action de même type provoque généralement le cisaillement du pêne.

Un résultat que l'invention vise à obtenir est un dispositif du type précité qui garantisse l'efficacité du blocage en rotation de l'arbre de direction.

Dans les dispositifs d'immobilisation en rotation connus, le corps du moyen de commande est évidemment maintenu solidaire du manchon tubulaire qui le loge.

A cet effet, d'une part, le corps du moyen précité porte radialement au moins un doigt qui fait saillie sur sa paroi cylindrique et d'autre part le manchon comporte en correspondance avec chaque doigt une perforation réservée dans sa paroi.

Pour permettre le montage et/ou le démontage de ce moyen de commande, lorsque la clé de manoeuvre est présente dans ce moyen et a été manoeuvrée jusqu'à la position de déblocage de l'arbre de direction, se trouve éclipsée une butée qui bloquait jusqu'alors le doigt.

Celui-ci peut alors être librement rétracté dans le corps du moyen de commande dès qu'on exerce axialement sur le dit doigt une certaine poussée.

Sans la clé, pour démonter le corps du moyen de déplacement commandé et par cela libérer l'arbre de direction du pêne de blocage en rotation, il faudrait, en chassant le doigt avec un poinçon suffisamment fort, briser la butée qui en position active du pêne, entrave normalement la rétraction du doigt.

Dans les réalisations connues à ce jour, cette action est possible non seulement par le garagiste après la perte de la clé mais aussi aux personnes non autorisées ce qui rend le dispositif peu fiable.

Un résultat que l'invention vise à obtenir est un dispositif d'immobilisation en rotation et/ou en translation du type précité qui interdise de manière fiable le démontage non autorisé du moyen de commande de son pêne de blocage.

A cet effet, l'invention a pour objet un dispositif du type précité notamment caractérisé en ce qu'il comprend une pièce dite de renfort maintenue solidaire du carter par un moyen de liaison et qui comporte d'une part au moins un pied d'appui sur la face externe de la paroi du carter et d'autre part au moins deux butées disposées en vis à vis pour enserrer, au moins sur une certaine hauteur prédéterminée, l'extrémité basse du corps du moyen de déplacement du pêne ou d'un fourreau solidaire de ce corps et ce de manière à s'opposer au déplacement du dit corps sous l'effet de chaque action reçue par le pêne lorsqu'il coopère avec l'arbre dans sa fonction d'immobilisation.

L'invention sera bien comprise à l'aide de la description ci-après faite à titre d'exemple non limitatif en regard du dessin ci-annexé qui représente schématiquement :

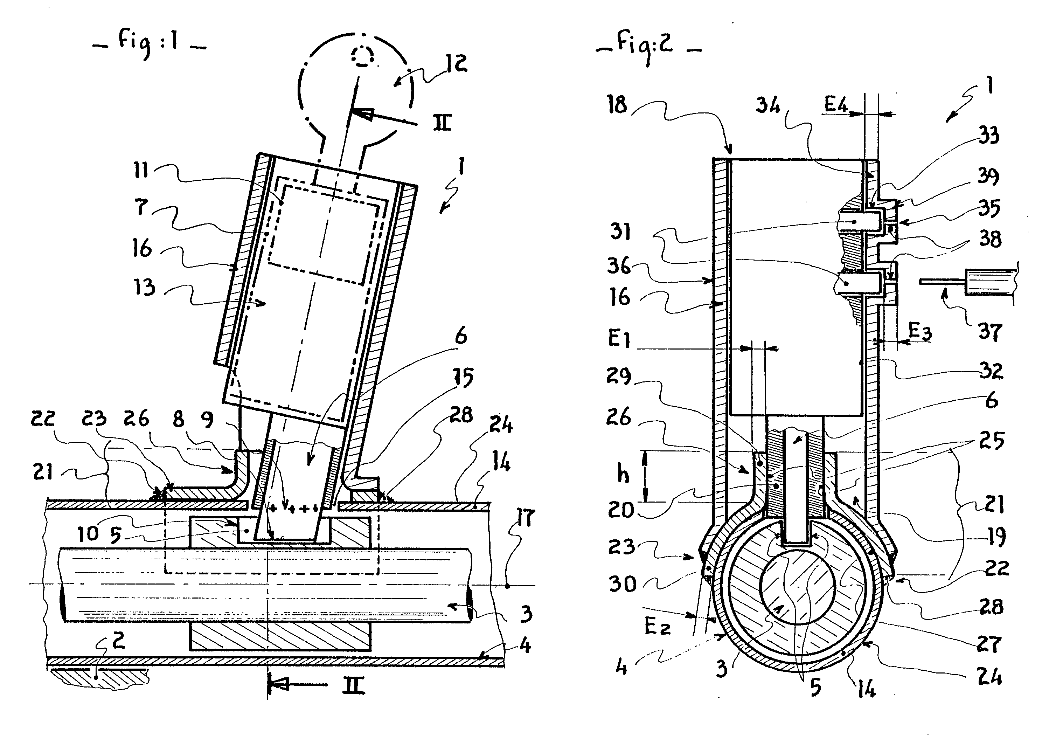

- figure 1 : le dispositif vu en coupe longitudinale,

- figure 2 : une vue selon II-II de la figure 1.

En se reportant au dessin, on voit un dispositif 1 d'immobilisation en rotation et/ou en translation par rapport à un support 2 d'un arbre 3 guidé dans au moins l'un de ces mouvements dans un carter 4 tubulaire, fixe par rapport au dit support.

Par exemple, l'arbre précité est l'arbre de commande du mécanisme d'orientation des roues d'un véhicule mais il pourrait s'agir de tout autre arbre tournant et/ou mobile en translation.

Tel que cela apparaît sur le dessin, le dispositif d'immobilisation met en oeuvre d'une part au moins une butée 5 solidaire de l'arbre et d'autre part au moins un pêne 6 mobile en translation et qui sous l'influence d'un moyen 7 de déplacement commandé peut être amené soit en une position 8 dite active pour coopérer avec la butée 5 et donc entraver le mouvement de l'arbre, soit en une position dite inactive 9 pour libérer la butée et permettre le mouvement souhaité de l'arbre.

De manière connue, lorsque c'est l'immobilisation en rotation de l'arbre que l'on souhaite, la butée 5 s'étend radialement sur le dit arbre et de préférence est à double action c'est à dire qu'elle interdit la rotation de l'arbre indifféremment dans le sens horaire ou dans le sens antihoraire.

Par exemple, tel que cela est représenté l'arbre qui porte au moins indirectement une rainure 10 dont les flancs opposés 5 s'étendent parallèlement à l'axe longitudinal , constituent précisément la butée double à l'encontre du pêne lorsqu'il est engagé dans la dite rainure.

Le moyen 7 de déplacement commandé du pêne comprend classiquement un mécanisme 11 à serrure pour la manoeuvre et le verrouillage du pêne au moyen d'une clé 12.

Tel que cela apparait le moyen de déplacement forme un ensemble avec le pêne 6 et précisément comprend un corps sensiblement cylindrique 13 logeant le mécanisme de manoeuvre 11 et tout ou partie du pêne selon qu'il est en position inactive 9 ou active 8 afin de guider le pêne jusqu'à proximité de la butée.

Classiquement, d'une part, le carter comporte dans sa paroi tubulaire 14 une découpe 15 permettant au pêne de venir coopérer avec la butée 5 et d'autre part le corps cylindrique 13 du moyen de commande du pêne est logé dans un manchon 16 maintenu solidaire du carter dans une orientation sensiblement radiale à l'axe longitudinal 17 de l'arbre à immobiliser et avec l'une de ses ouvertures extrêmes 18, 19 située en correspondance avec la découpe 15 du carter.

Tel que cela apparaît sur le dessin, bien que le corps 13 du moyen de manoeuvre soit sensiblement ajusté dans le manchon 16, celle 20 dite partie extrême basse des parties extrêmes du corps qui guide le pêne 6 participe à l'immobilisation en rotation du moyen de déplacement de commande par rapport au carter et à cet effet elle est ajustée dans la découpe 15 du carter.

Conformément à l'invention, le dispositif comprend une pièce dite de renfort 21 maintenue solidaire du carter par un moyen de liaison 22 et qui comporte d'une part au moins un pied d'appui 23 sur la face externe 24 de la paroi 14 du carter et d'autre part au moins deux butées 25 disposées en vis à vis pour enserrer au moins sur une certaine hauteur prédéterminée "h", l'extrémité basse 20 du corps du moyen de déplacement du pêne ou d'un fourreau solidaire de ce corps et ce de manière à s'opposer au déplacement du dit corps sous l'effet de chaque action reçue par le pêne lorsqu'il coopère avec l'arbre dans sa fonction d'immobilisation.

De préférence, les butées 25 sont constituées par les flancs 25 d'un tronçon également tubulaire 26.

Suivant l'invention, le pied 23 d'appui sur la face extérieure 24 de la paroi 14 du carter présente une surface 27 de contact qui épouse étroitement la forme de la paroi 14 du dit carter et s'étend autour de la découpe en coiffant au moins sensiblement le demi-profil transversal du carter et ce symétriquement à la dite découpe.

De préférence, le moyen de liaison de la pièce de renfort au carter consiste en un cordon de soudure réalisé à la périphérie 28 du pied d'appui 23 de cette pièce sur la face extérieure de la paroi du carter.

Ces particularités techniques permettent de renforcer considérablement la liaison du moyen de déplacement au carter évidemment pour peu que l'on ait correctement dimensionné d'une part non seulement l'épaisseur E1 de la paroi 29 du tronçon tubulaire 26 que présente la pièce de renfort 21 mais également sa hauteur h et d'autre part l'épaisseur E2 de la paroi 30 du pied d'appui 23 de cette pièce sur le carter.

Notamment, selon les matériaux utilisés l'homme de l'art est à même de déterminer les épaisseurs et hauteurs précitées ainsi d'ailleurs que la dimension du pied d'appui selon l'axe longitudinal du carter.

Avantageusement, la pièce de renfort est obtenue par emboutissage d'un flanc de tôle.

De préférence, le manchon tubulaire est solidaire du pied d'appui de la pièce de renfort et par exemple soudé sur cette pièce.

Comme cela est représenté le moyen 7 de déplacement commandé du pêne est immobilisé en translation dans le manchon tubulaire par au moins un organe 31 tel un doigt qui fait saillie sur la face cylindrique 32 du corps du dit moyen et se trouve engagé dans un logement 33 prévu transversalement dans la paroi 34 du manchon tubulaire.

Classiquement, ce logement 33 débouche par une ouverture 35 dans la face extérieure 36 du dit manchon de manière à permettre, après manoeuvre de la clé 12, l'actionnement du doigt au moyen d'un poussoir 37 pour autoriser l'extraction du corps du moyen de déplacement commandé, par exemple lors d'une opération d'entretien.

Conformément à l'invention, au lieu de déboucher dans la face extérieure 35 du manchon tubulaire sensiblement selon toute la section transversale du doigt 31, chaque logement 33 prévu pour loger un tel doigt y débouche par une ouverture 35 dite capillaire c'est à dire de très petite section transversale par rapport à celle du logement qui est généralement de quelques millimètres.

Selon l'invention, l'ouverture capillaire 35 est constituée par l'un des orifices extrêmes 35 d'un canal capillaire 38 qui traverse une paroi 39 solidaire de la paroi 34 du manchon, laquelle est d'épaisseur E3 au moins égale à celle E4 de cette dernière paroi 34.

De préférence, le canal capillaire 38 est cylindrique de révolution et à un diamètre de l'ordre de trois dixièmes de millimètres.

Pour pouvoir actionner le doigt qui retient le corps du moyen de déplacement commandé dans le manchon tubulaire, il faut utiliser un poussoir de diamètre légèrement inférieur à celui du canal et qui soit suffisamment rigide.

Compte tenu de son diamètre, le poinçon est tout de même relativement fragile.

Ainsi, même en disposant d'un tel poinçon, il est exclu de pouvoir forcer l'enfoncement du doigt si l'on ne dispose pas de la clé de manoeuvre du pêne pour effacer la butée qui, tel que cela a été expliqué dans l'entrée en matière, s'oppose à l'enfoncement du dit doigt lorsque le pêne est en position active.

Cette particularité est évidemment destinée à empêcher les actes de malveillance.

Avantageusement, le corps du moyen de déplacement commandé comprend au moins deux doigts du type précité et le manchon au moins deux logements présentant les particularités également précitées.

Cette dernière disposition renforce l'invulnérabilité du montage.

## Revendications

1. Dispositif d'immobilisation en rotation et/ou en translation par rapport à un support (2) d'un arbre (3) guidé dans au moins l'un de ces mouvements dans un carter tubulaire (4) fixe par rapport au dit support et notamment d'un arbre de direction, lequel dispositif d'immobilisation met en oeuvre d'une part au moins une butée (5) solidaire de l'arbre et d'autre part au moins un pêne (6) mobile en translation et qui, sous l'influence d'un moyen (7) de déplacement commandé extérieur au carter peut être amené soit en une position active (8) pour à travers une découpe (15) ménagée dans la paroi (14) tubulaire du carter, coopérer avec la butée (5) de l'arbre, soit au contraire en une position inactive (9) libérant la dite butée (5), lequel moyen (7) de déplacement forme un ensemble avec le pêne (6) et comprend un corps cylindrique (13) logeant notamment le mécanisme de manoeuvre (11) du pêne, ce corps cylindrique étant quant à lui porté par le carter dans un manchon (16) tubulaire maintenu dans une orientation sensiblement radiale à l'axe longitudinal (17) de l'arbre à immobiliser et avec l'une de ses ouvertures extrêmes (18, 19) en correspondance avec la découpe (15) du carter de manière telle que la partie basse (20) du corps cylindrique (13) c'est à dire celle qui loge le pêne (6) se situe au moins en vis à vis de la découpe,
ce dispositif étant **CARACTERISE** en ce qu'il comprend une pièce dite de renfort (21) maintenue solidaire du carter par un moyen de liaison (22) et qui comporte d'une part au moins un pied (23) d'appui sur la face externe (24) de la paroi (14) du carter et d'autre part au moins deux butées (25) disposées en vis à vis pour enserrer, au moins sur une certaine hauteur prédéterminée "h", l'extrémité basse (20) du corps du moyen de déplacement du pêne ou d'un fourreau solidaire de ce corps et ce de manière à s'opposer au déplacement du dit corps sous l'effet de chaque action reçue par le pêne lorsqu'il coopère avec l'arbre dans sa fonction d'immobilisation.

2. Dispositif selon la revendication 1 **caractérisé** en ce que le pied (23) d'appui sur la face extérieure (24) de la paroi (14) du carter présente une surface (27) de contact qui épouse étroitement la forme de la paroi (14) du dit carter et s'étend autour de la découpe en coiffant au moins sensiblement le demi-profil transversal du carter et ce symétriquement à la dite découpe.

3. Dispositif selon la revendication 1 ou 2 dont le corps cylindrique (13) du moyen de déplacement commandé du pêne (6) est immobilisé en translation dans le manchon tubulaire au moyen d'au moins un organe (31) tel un doigt qui fait saillie sur la face cylindrique (32) du corps et se trouve engagé dans un logement (33) qui prévu transversalement dans la paroi (34) du manchon tubulaire débouche dans la face extérieure du dit manchon par une ouverture (35), **caractérisé** en ce qu'au lieu de déboucher dans la face extérieure (35) du manchon tubulaire sensiblement selon toute la section transversale du doigt (31), chaque logement (33) prévu pour loger un tel doigt y débouche par une ouverture (35) dite capillaire c'est à dire de très petite section transversale par rapport à celle du logement qui est généralement de quelques millimètres.

4. Dispositif selon la revendication 3 **caractérisé** en ce que l'ouverture capillaire (35) est constituée par l'un des orifices extrêmes (35) d'un canal capillaire (38) qui traverse une paroi (39) solidaire de la paroi (34) du manchon, laquelle est d'épaisseur E3 au moins égale à celle E4 de cette dernière paroi (34).

— Fig : 1 —

— Fig : 2 —

EP 0 365 423 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 124 766 (GELBON)<br>* Figure; pages 1,2 *<br>--- | 1-3 | B 60 R 25/02 |
| A | DE-A-2 904 386 (DAIMLER-BENZ)<br>* Figures 1,2,4; page 9, lignes 22-33; page 11, lignes 16-22 *<br>--- | 1 | |
| A | FR-A-2 210 208 (NEIMAN)<br>* Figures 1-10; page 2, ligne 9 - page 4, ligne 21 *<br>--- | 3 | |
| A | FR-A-2 208 432 (NEIMAN)<br>* Figures 1-14; page 1, lignes 1-25; page 2, ligne 14 - page 5, ligne 22 *<br>----- | 3 | |

**DOMAINES TECHNIQUES RECHERCHES (Int. Cl.5)**

B 60 R

**Le présent rapport a été établi pour toutes les revendications**

| Lieu de la recherche | Date d'achèvement de la recherche | Examinateur |
|---|---|---|
| LA HAYE | 26-01-1990 | D'SYLVA C.H.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                    

& : membre de la même famille, document correspondant

EPO FORM 1503 03.82 (P0402)